(19) Europäisches Patentamt
European Patent Office
Office européen des brevets

(11) **EP 4 376 296 B1**

(12) **EUROPEAN PATENT SPECIFICATION**

(45) Date of publication and mention
of the grant of the patent:
**12.02.2025   Bulletin 2025/07**

(21) Application number: **22306726.5**

(22) Date of filing: **23.11.2022**

(51) International Patent Classification (IPC):
**H02S 50/10** *(2014.01)*

(52) Cooperative Patent Classification (CPC):
**H02S 50/10**

(54) **METHOD FOR ESTIMATING A BREAKDOWN VOLTAGE OF A PHOTOVOLTAIC CELL**

VERFAHREN ZUR SCHÄTZUNG EINER DURCHBRUCHSPANNUNG EINER FOTOVOLTAISCHEN ZELLE

PROCÉDÉ D'ESTIMATION D'UNE TENSION DE CLAQUAGE D'UNE CELLULE PHOTOVOLTAÏQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**29.05.2024   Bulletin 2024/22**

(73) Proprietors:
• **Commissariat à l'Energie Atomique et aux
Energies
Alternatives
75015 Paris (FR)**
• **Centre National de la Recherche Scientifique
75016 Paris (FR)**
• **Université Savoie Mont Blanc
73000 Chambéry (FR)**

(72) Inventors:
• **HA, Duy Long
38054 GRENOBLE CEDEX 9 (FR)**
• **CARDENAS, Carlos
73000 CHAMBERY (FR)**
• **AMHAL, Mohamed
38054 GRENOBLE CEDEX 9 (FR)**
• **DUTYKH, Denys
73000 CHAMBERY (FR)**

(74) Representative: **Lavoix
2, place d'Estienne d'Orves
75441 Paris Cedex 09 (FR)**

(56) References cited:
**US-A1- 2015 131 187     US-A1- 2018 166 882**

• **CALCABRINI ANDRES ET AL: "Low-breakdown-
voltage solar cells for shading-tolerant
photovoltaic modules", CELL REPORTS
PHYSICAL SCIENCE, vol. 3, no. 12, 1 December
2022 (2022-12-01), pages 101155, XP093040105,
ISSN: 2666-3864, DOI: 10.1016/
j.xcrp.2022.101155**

**Description**

The present invention relates to a method for at least estimating a breakdown voltage of a single photovoltaic cell belonging to a set of photovoltaic cells connected in series within a circuit, said set forming a photovoltaic module.

The present invention also relates to a computer program comprising software instructions which, when executed by a computer, implement such a method for at least estimating a breakdown voltage of a single photovoltaic cell belonging to a set of photovoltaic cells connected in series within a circuit, said set forming a photovoltaic module.

The invention also relates to a device for at least estimating a breakdown voltage of a single photovoltaic cell belonging to a set of photovoltaic cells connected in series within a circuit, said set forming a photovoltaic module.

The invention also relates to a system for at least estimating a breakdown voltage of a single photovoltaic cell belonging to a set of photovoltaic cells connected in series within a circuit, said set forming a photovoltaic module.

The disclosure relates to the field of electricity production by photovoltaic installations, and more particularly in the field of monitoring the proper functioning of such installations.

In a known manner, photovoltaic installations (also called photovoltaic power plants) comprise one or more strings of photovoltaic modules, each string comprising a set of photovoltaic modules, which may be reduced to a single photovoltaic module, the strings being connected in series and/or in parallel between a positive terminal and a negative terminal, each module being composed of at least one photovoltaic cell (also called solar cell hereinafter), generally a matrix of cells, each photovoltaic cell being a unit configured to produce an electric current from light energy. Such an installation is adapted to supply electrical energy to a load, for example an inverter adapted to generate AC voltages and currents from a source producing DC electrical current, connected to an AC electrical grid.

One of the problems that arises in this type of photovoltaic plant is the monitoring of the proper functioning of the installation, and also the diagnosis in case of detection of malfunction.

More specifically, the disclosure relates to estimate at least one of the characteristic of a photovoltaic cell (i.e. a solar cell) namely the breakdown voltage corresponding to the maximum reverse voltage that can be applied to the photovoltaic cell without causing an exponential increase of the current in it. Said breakdown voltage is useful to model accurately default(s) in said photovoltaic cell and more generally the photovoltaic module to which said cell belongs.

Currently, to estimate at least said breakdown voltage of a photovoltaic cell, one of the known solution consists in injecting a current value above a predetermined threshold to estimate the inverse part of the current-voltage curve of a photovoltaic module, said photovoltaic module comprising only said photovoltaic cell, which is not realistic. Document US 2015/131187 A1 discloses a circuit for protecting a photovoltaic string.

A bypass switch connects in parallel to the photovoltaic string and a hot spot protection switch connects in series with the photovoltaic string. A first control signal controls opening and closing of the bypass switch and a second control signal controls opening and closing of the hot spot protection switch. Upon detection of a hot spot condition the first control signal closes the bypass switch and after the bypass switch is closed the second control signal opens the hot spot protection switch.

One other known solution consists in dismantle the protection diodes of said photovoltaic module (i.e. solar module) for characterizing said module, which is disadvantageous since involving a "destruction" by dismantling.

The invention therefore aims to address the problem of characterizing a solar cell (i.e. a photovoltaic cell) in a non-destructive and efficient way.

To this end, the object of the invention is a method for at least estimating a breakdown voltage of a single photovoltaic cell belonging to a set of photovoltaic cells connected in series within a circuit, said set forming a photovoltaic module, said method being at least partially implemented by a device, and said method comprising :

- a first acquisition step of measurement(s) of said circuit wherein all photovoltaic cells of said set are unshaded, said first acquisition step comprising at least obtaining a measurement of the open circuit voltage $V_{oc,u}$ of said circuit;
- a second acquisition step of measurement(s) of said circuit wherein a single photovoltaic cell of said set of photovoltaic cells is shaded, said second acquisition step comprising at least obtaining a measurement of the open circuit voltage $V_{oc,s}$ of said circuit;
- determining an estimation of the breakdown voltage $V_{br}$ of said single shaded photovoltaic cell as function of:

    - the open circuit voltage $V_{oc,u}$ of said circuit wherein all photovoltaic cells of said set are unshaded;
    - the open circuit voltage $V_{oc,s}$ of said circuit wherein said single photovoltaic cell is shaded;
    - the number $n_s$ of photovoltaic cells belonging to said set.

According to particular embodiments, the method comprises one or more of the following characteristics, taken separately or in any technically feasible combination:

- said estimated breakdown voltage $V_{br}$ is determined by using the following equation:

$$V_{br} = -V_{oc,s} + V_{oc,u} - \frac{V_{oc,u}}{n_s} = \frac{-n_s \cdot V_{oc,s} + (n_s - 1) \cdot V_{oc,u}}{n_s} \ ;$$

- said method further comprises a performance measuring step, said performance measuring step comprising the determining of a root mean square error between said estimated breakdown voltage and a theoretical breakdown voltage associated to the single shaded photovoltaic cell of said circuit;

- said method further comprises estimating the reverse bias voltage of said single shaded photovoltaic cell of said circuit;

- for estimating the reverse bias voltage of said single shaded photovoltaic of said circuit :

  - said first acquisition step comprises also obtaining a measurement of a current-voltage curve of said circuit wherein all photovoltaic cells of said set are unshaded;
  - said second acquisition step comprises also obtaining a measurement of a current-voltage curve of said circuit wherein a single photovoltaic cell of said set of photovoltaic cells is shaded;

  and said method further comprises determining an estimation of the reverse bias voltage $V_{sc,s}$ of said single shaded photovoltaic cell of said circuit, as function of:

  - the voltage $V_{m,u}$ of said photovoltaic module wherein all photovoltaic cells of said set are unshaded;
  - the voltage $V_{m,s}$ of said photovoltaic module wherein said single photovoltaic cell is shaded;
  - the number $n_s$ of photovoltaic cells belonging to said set.

- said method further comprises a step of tracing a reverse bias voltage curve associated to the estimated reverse bias voltage, said step of tracing using the following equation:

$$V_{sc,s} = -V_{m,s} + V_{m,u} - \frac{V_{m,u}}{n_s} = \frac{-n_s \cdot V_{m,s} + (n_s - 1) \cdot V_{m,u}}{n_s}$$

The invention also relates to a computer program comprising software instructions which, when executed by a computer, implement a method as defined above.

The invention also relates to a device for at least estimating a breakdown voltage of a single photovoltaic cell belonging to a set of photovoltaic cells connected in series within a circuit, said set forming a photovoltaic module, said device comprising at least :

- an acquisition module configured to acquire at least:

  - a measurement of the open circuit voltage $V_{oc,u}$ of said circuit wherein all photovoltaic cells of said set are unshaded;
  - a measurement of the open circuit voltage $V_{oc,s}$ of said circuit wherein a single photovoltaic cell of said set of photovoltaic cells is shaded;

- a determining module configured to determine an estimation of the breakdown voltage $V_{br}$ of said single shaded photovoltaic cell as function of :

  - the open circuit voltage $V_{oc,u}$ of said circuit wherein all photovoltaic cells of said set are unshaded;
  - the open circuit voltage $V_{oc,s}$ of said circuit wherein said single photovoltaic cell is shaded;
  - the number $n_s$ of photovoltaic cells belonging to said set.

According to an optional embodiment of said device, said acquisition module is a current-voltage curve tracer or a multimeter.

The invention also relates to a system for at least estimating a breakdown voltage of a single photovoltaic cell belonging to a set of photovoltaic cells connected in series within a circuit, said set forming a photovoltaic module, said system comprising as described device above, and a shading module configured to shade a single photovoltaic cell of said set of photovoltaic cells.

The invention and its advantages will be better understood upon reading the following detailed description of a particular embodiment, given solely by way of a nonlimiting example, wherein this description is made with reference to the appended drawings, wherein:

- figure 1 shows a block representation of a system for at least estimating a breakdown voltage of a single photovoltaic cell belonging to a set of photovoltaic cells connected in series within a circuit, said set forming a photovoltaic module, according to the invention;
- figure 2 shows the diagram for $n_s$ solar cells connected in series at open circuit voltage condition in an unshaded case and in a shaded case,
- figure 3 shows a flowchart of the breakdown voltage of a single photovoltaic cell estimation method according to an embodiment of the present invention,
- figure 4 shows the IV curves calculated at 1000 W m$^{-2}$, considering an irradiance of one single solar cell equals to 0, 400, 700, and 1000 W m$^{-2}$,
- figure 5 shows the estimated and theoretical IV curves in the reverse (and direct) bias voltage region when a single solar cell has an irradiance equal to 0, 400, and 700 W m$^{-2}$;
- figure 6 shows the voltage error calculated for each estimated IV curve.

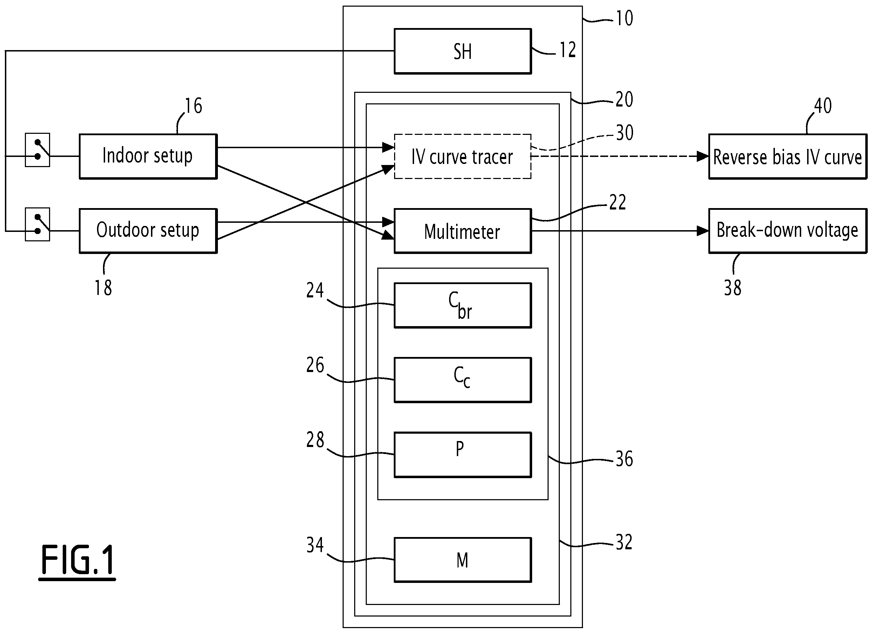

In the example of figure 1, the system 10 for at least estimating a breakdown voltage of a single photovoltaic cell belonging to a set of photovoltaic cells connected in series within a circuit, said set forming a photovoltaic module comprises a shading module 12 configured to shade a single photovoltaic cell of said set of photovoltaic cells.

More precisely, said system 10, thanks to one or more switches 14 can be applied either in indoor conditions, by using a dedicated predetermined indoor setup 16, or in outdoor conditions, by using a dedicated predetermined outdoor setup 18. In other words, the method according to the present disclosure can be applied either in outdoor or indoor conditions.

In addition, said system 10 comprises a device 20 for at least estimating a breakdown voltage of a single photovoltaic cell belonging to a set of photovoltaic cells connected in series within a circuit, said set forming a photovoltaic module.

More precisely, said device 20 comprises at least firstly an acquisition module configured to acquire a measure of the open circuit voltage $V_{oc,u}$ of said circuit wherein all photovoltaic cells of said set are unshaded, and configured to measure the open circuit voltage $V_{oc,s}$ of said circuit wherein a single photovoltaic cell of said set of photovoltaic cells is shaded.

According to a first basic variant said acquisition module is a multimeter 22.

In addition, said device 20 comprises a first determining module 24 configured to determine (i.e. compute $C_{br}$) an estimation of the breakdown voltage $V_{br}$ of said single shaded photovoltaic cell as function of a triplet of parameters comprising :

- the open circuit voltage $V_{oc,u}$ of said circuit wherein all photovoltaic cells of said set are unshaded;
- the open circuit voltage $V_{oc,s}$ of said circuit wherein said single photovoltaic cell is shaded;
- the number $n_s$ of photovoltaic cells belonging to said set.

As an optional complement (represented in dotted line), said device 20 comprises also a second determining module 26 configured to determine (i.e. compute $C_c$) an estimation of the reverse bias voltage of said single shade solar cell. More precisely, said optional second determining module is configured to determine and trace a curve associated to said estimation of the reverse bias voltage of said single shade solar cell.

As an optional complement, said device 20 comprises also a performance measuring (i.e. evaluating) module 28.

It has to be noted that as an alternative, according to another variant (represented in dotted line), said acquisition module is a current-voltage curve tracer 30 (i.e. also classically called an IV curve tracer I standing for current and V standing for voltage).

According to another variant (not represented), said acquisition module is configured to obtain (i.e. acquire, receive) the measurement of said circuit wherein all photovoltaic cells of said set are unshaded and the measurement of said circuit wherein a single photovoltaic cell of said set of photovoltaic cells is shaded from a measurement module (e.g. a multimeter or a current-voltage tracer) which is outside the device 20.

Depending on the type of acquisition module, the IV curve of the solar cell is estimated or, if not, only the breakdown voltage is be calculated. Indeed, if the experimenter could count with an IV curve tracer 30, which case allow the calculation of the reverse IV curve of the solar cell. However, if the experimenter count with a multimeter 22, it is possible to extract only the breakdown voltage.

In the example of figure 1, the device 20 for at least estimating a breakdown voltage of a single photovoltaic cell belonging to a set of photovoltaic cells connected in series within a circuit, said set forming a photovoltaic module, is at least partially electronic and comprises an information processing unit 32, for example made up of a processor or microprocessor M 34 associated with a memory 36, the multimeter 22 and/or the current-voltage curve tracer 30 being connected to said information processing unit 32.

In the example of figure 1, at least the first determining module 24, as well as, optionally and additionally, the acquisition module, the second determining module 26 and the performance measuring volume 28, are each made in the form of a software component, executable by the microprocessor 34. The memory 36 of the device 20 is then capable of storing computing software configured to determine an estimation of the breakdown voltage, and optionally and additionally, to determine an estimation of the reverse bias voltage and/or to measure a performance of said estimation of said breakdown voltage.

The processor 34 is then capable of executing each of the software applications from among the first determining software, as well as, by way of optional addition, the second determining software and/or the performance measuring software.

In a variant that is not shown, the first determining module 24, as well as, optionally and additionally, the second determining module 26 and the performance measuring volume 28, are each made in the form of a programmable logic component, such as an FPGA (Field Programmable Gate Array), or in the form of a dedicated integrated circuit, such as an ASIC (Applications Specific Integrated Circuit).

When the device 20 is made, at least in part, in the form of one or several software programs, i.e. in the form of a computer program, it is further able to be stored on a medium, not shown, readable by computer. The computer-readable medium is for example a medium suitable for storing electronic instructions and able to be coupled with a bus of a computer system. As an example, the readable medium is an optical disc, a magnetic-optical disc, a ROM memory, a RAM memory, any type of non-volatile memory (for example, EPROM, EEPROM, FLASH, NVRAM), a magnetic card or an optical card. A computer program including software instructions is then stored on the readable medium.

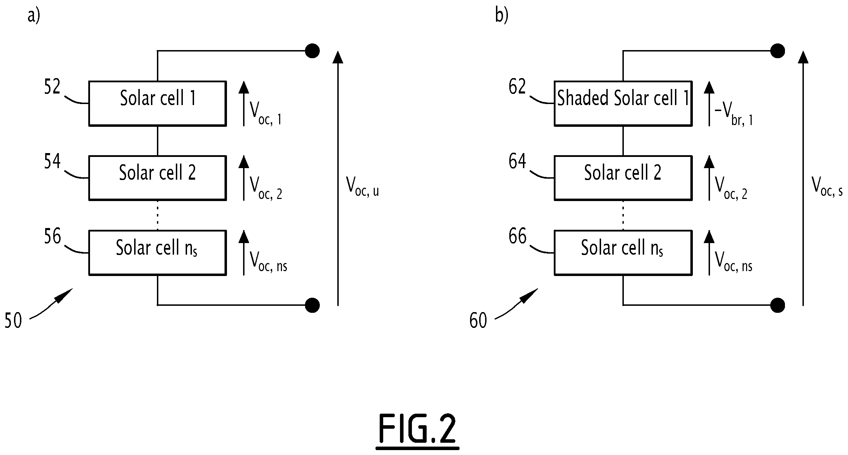

According to an optional and additional aspect, said device 20 is also configured to pilot (i.e. control, command) the shadowing module 12 in order to obtain two different measurement configurations of the $n_s$ solar cells connected in series, said two different configurations corresponding, at open circuit voltage condition, to an unshaded case a) and to a shaded case b) as illustrated by figure 2.

According to another variant, said shadowing module 12 is manually operated.

As illustrated by figure 2, it is supposed that instead of considering a photovoltaic module as such, an electrical system (i.e. circuit) composed by $n_s$ solar cells connected in series is considered according to the present disclosure.

In the unshaded case a), the photovoltaic module 50 comprises a set of $n_s$ solar cells 52, 54,... 56 named respectively "Solar cell 1", "Solar cell 2", ..."Solar cell $n_s$", which are all unshaded and connected in series within a circuit. The open circuit voltage $V_{oc,u}$ of said circuit wherein all photovoltaic cells of said set are unshaded is described as the sum of all the solar cell voltages as illustrated by the following equation:

$$V_{oc,u} = \sum_{i=2}^{n_s} V_{oc,i} + V_{oc,1} \ (1).$$

In the shaded case b), the photovoltaic module 60 comprises a set of $n_s$ solar cells 62, 64...66 wherein a single solar cell is shaded, for example the "Shaded Solar cell 1" referred with reference 62. In this configuration, the open circuit voltage $V_{oc,s}$ of said circuit wherein said single photovoltaic cell is shaded, is expressed by the following equation:

$$V_{oc,s} = \sum_{i=2}^{n_s} V_{oc,i} - V_{br,1} \ (2).$$

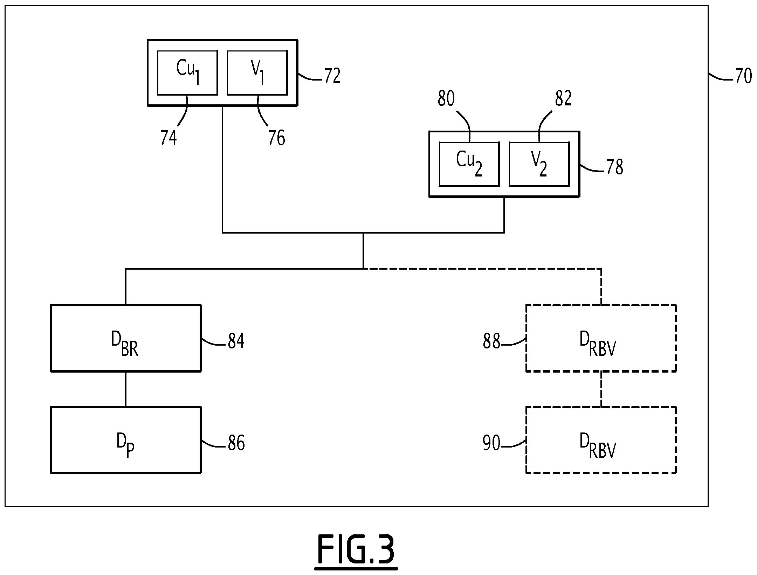

The operation of the device 20 will now be described with reference to figure 3, which schematically illustrates an example of implementation, according to the present invention, of a method 70 for at least estimating a breakdown voltage of a single photovoltaic cell belonging to a set of photovoltaic cells connected in series within a circuit, said set forming a photovoltaic module.

In the embodiment of figure 3, during a first step 72, the device 20, via its acquisition module, acquires measurement(s) of said circuit wherein all photovoltaic cells of said set are unshaded (as illustrated by the part a) of figure 2). More precisely, according to the embodiment of figure 3, said first acquisition step 72 comprises, on the one hand, an optional sub-step 74 of obtaining a current-voltage curve $Cu_1$ of said circuit, and on the other hand, a sub-step 76 of obtaining a measurement $V_1$ of at least the open circuit voltage $V_{oc,u}$ of said circuit.

During another step 78 of the embodiment of figure 3, the device 20, via its acquisition module, acquires measurement(s) of said circuit wherein a single photovoltaic cell of said set of photovoltaic cells is shaded (as illustrated by the part b) of figure 2). More precisely, according to the embodiment of figure 3, said second acquisition step 78 comprises, on the one hand, an optional sub-step 80 of obtaining a measurement of a current-voltage curve $Cu_2$ of said circuit wherein a single photovoltaic cell of said set of photovoltaic cells is shaded, and comprises on the other hand a sub-step 82 of obtaining a measurement $V_2$ of the open circuit voltage $V_{oc,s}$ of said circuit.

It can be noticed that according to a different embodiment from the one of figure 3, said step of 78 of acquisition of measurement(s) of said circuit wherein a single photovoltaic cell of said set of photovoltaic cells is shaded, can be indifferently performed before the step 72 of acquisition of measurement(s) of said circuit wherein all photovoltaic cells of said set are unshaded.

After the two acquisition steps 72 and 78, the method according to the present disclosure comprises a step 84 wherein said device 20, via its first determining module 24, determines $D_{br}$ an estimation of the breakdown voltage $V_{br}$ of said single shaded photovoltaic cell as function of :

- the open circuit voltage $V_{oc,u}$ of said circuit wherein all photovoltaic cells of said set are unshaded;
- the open circuit voltage $V_{oc,s}$ of said circuit wherein said single photovoltaic cell is shaded;
- the number $n_s$ of photovoltaic cells belonging to said set.

Indeed, the general relation is described in equation (1) as indicated previously, where the open circuit voltage of the solar module is described as the sum of all the solar cell voltages:

$$V_{oc,u} = \sum_{i=2}^{n_s} V_{oc,i} + V_{oc,1} \ (1).$$

However, if a solar cell is completely shadowed, and the protection diodes are not activated, equation (1) is transformed into the following equation (2):

$$V_{oc,s} = \sum_{i=2}^{n_s} V_{oc,i} - V_{br,1} \ (2).$$

Then, subtracting equations (2) and (1), it is proposed according to the present disclosure to find and explicit solution for estimating the breakdown voltage, as indicated by equation (3):

$$V_{br,1} = -V_{oc,s} + V_{oc,u} - V_{oc,1} \ (3)$$

Moreover, assuming that all the solar cells are equals, the open circuit voltage of a single solar cell can be rewritten in function of $V_{oc,u}$ and $n_s$ as $V_{oc,u}/n_s$.

More precisely, equation (4) indicates the relation between the breakdown voltage, the unshaded open circuit voltage, the shaded open circuit, and the number of solar cells.

$$V_{br,1} = -V_{oc,s} + V_{oc,u} - \frac{V_{oc,u}}{n_s} = \frac{-n_s \cdot V_{oc,s} + (n_s - 1) \cdot V_{oc,u}}{n_s} (4)$$

In other words, according to the present disclosure, it is proposed to estimate the breakdown voltage of one single solar cell by shading it according to non-represented step performed by the shadowing module 12 of figure 1.

The method 70 according to the embodiment of figure 3, further comprises a step 86, wherein said device 20 determines $D_P$ the performance of said estimation. Said performance measuring step 86 (i.e. performance determining step) comprises the determining of a root mean square error (i.e. RMSE) between said estimated breakdown voltage and a theoretical breakdown voltage associated to the single shaded photovoltaic cell of said circuit.

In other words, the performance of the method is measured according to the Root Mean Squared Error RMSE, as indicated in equation (5):

$$RMSE = \sqrt{\sum (\hat{y} - y)^2} (5)$$

wherein, $\hat{y}$ indicates the estimated value, and y represents the theoretical value.

According to the embodiment of figure 3, said method further comprises an optional (represented in dotted line) step 88 of determining $D_{RVB}$ an estimation of the reverse bias voltage $V_{sc,s}$ of said single shaded photovoltaic cell of said circuit, as function of:

- the voltage $V_{m,u}$ of said photovoltaic module wherein all photovoltaic cells of said set are unshaded;
- the voltage $V_{m,s}$ of said photovoltaic module wherein said single photovoltaic cell is shaded;
- the number $n_s$ of photovoltaic cells belonging to said set.

Indeed, according to the present disclosure, it is proposed to extend estimating of the breakdown voltage to determine the complete IV curve in the reverse voltage region.

In particular, the following equation (6) indicates the generalization of the previous equation (4):

$$V_{sc,s} = -V_{m,s} + V_{m,u} - \frac{V_{m,u}}{n_s} = \frac{-n_s \cdot V_{m,s} + (n_s - 1) \cdot V_{m,u}}{n_s} \quad (6)$$

wherein, the sub-indexes "m" and "sc" refers to "module" and "solar cell", respectively. Thus, equation (6) describes the electrical behavior of the shaded cell given the IV curves unshaded and shaded as obtained during previous optional substeps 74 and 80.

According to the embodiment of figure 3, said method further comprises an optional (represented in dotted line) step 90 of tracing $T_{RVB}$ the reverse bias voltage curve associated to the estimated reverse bias voltage, said step of tracing using the previous equation (6).

For illustrating the applicability of the proposed method 70, a solar module counting with seventy-two solar cells divided into three substrings and a theoretical breakdown voltage value equals to -5.52 V is used (assuming that all the solar cells are equals (i.e. identical)).

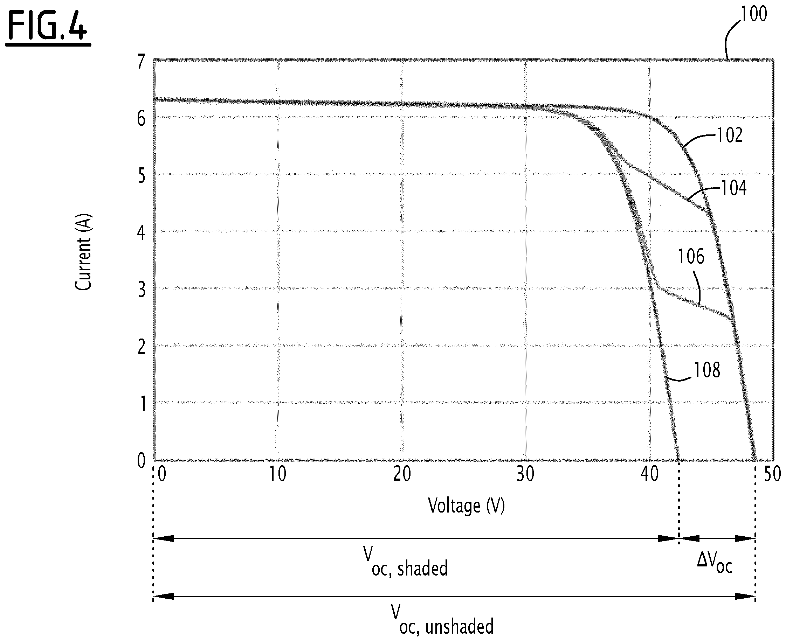

Figure 4 shows in view 100 the effect when one single solar cell is shaded, for irradiances of 1000, 700, 400, and 0 $W\,m^{-2}$ corresponding to curves 102, 104, 106 and 108 respectively, and considering a cell temperature equal to 25 °C for all cases.

Here, it can be appreciated that while increasing the shading effect (i.e. decreasing the irradiance value), the open circuit voltage of the shaded IV curves approaches to a value which is higher than 40 V, which indicates that the protection diode is not activated, therefore the proposed method can be applied.

For the case when a solar cell (i.e. photovoltaic cell) is fully shaded (i.e. irradiance of said solar cell equals 0 W/m2), the protection diode is indeed activated if and only if the open circuit voltage equals two thirds of the unshaded value.

In the following, when still considering a solar module counting with seventy-two solar cells divided into three substrings and a theoretical breakdown voltage value equals to -5.52 V, table 1 below indicates the open circuit voltage and the maximum power point for the IV curves obtained for this solar module under study.

| Irradiance (W m⁻²) | Open circuit voltage (V) | Maximum power point (W) |
|---|---|---|
| 1000 | 48.51 | 240.9 |
| 700 | 48.50 | 207.1 |
| 400 | 48.48 | 205.8 |
| 0 | 42.35 | 204.9 |

Here, it can be appreciated the effect of the shadowing under one single solar cell, decreasing the maximum power generation from 240.9 W to 204.9 W.

Applying the estimation by using equation (4), it is found that the estimated breakdown voltage equals -5.48 V, which is close to the theoretical value of -5.52 V. Thus, for this case of application considering a solar module counting with seventy-two solar cells divided into three substrings and a theoretical breakdown voltage value equals to -5.52 V, an RMSE equals to 0.04 V is achieved.

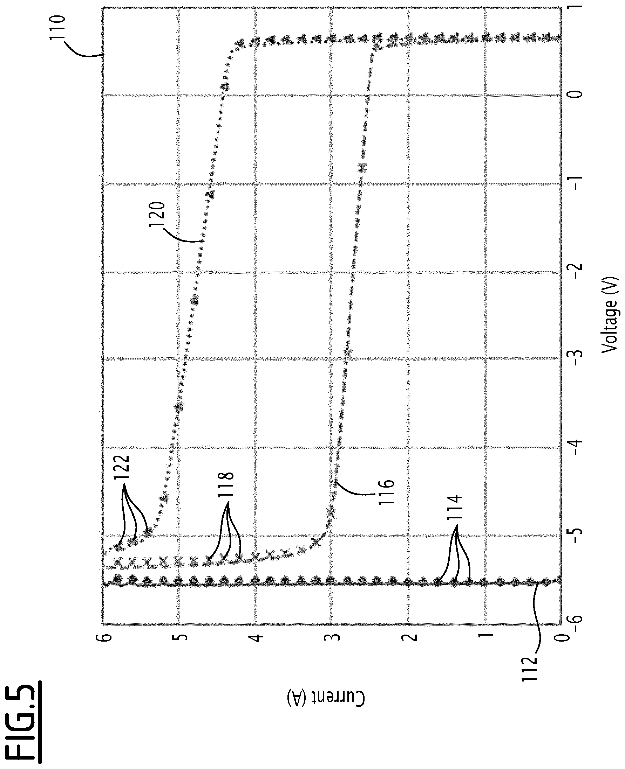

Figure 5 shows in view 110 the IV curves 112, 116 and 120 estimated in the reverse (and direct) bias voltage region for the IV curves indicated in figure 4 respectively when a single solar cell has an irradiance equal to 0, 400, and 700 $W\,m^{-2}$. Additionally, is presented the theoretical IV curves for the irradiances by means of dots 114, 118 and 112, respectively for irradiances of 0 $W\,m^{-2}$ (curve 112 and dots 114), 400 $W\,m^{-2}$ (curve 116 and dots 118), and 700 $W\,m^{-2}$ (curve 120 and dots 122).

Figure 5 permits to appreciate that the estimated IV curves replicate the same shape of the original IV curve. Therefore, by using an appropriated electrical model such as the one described by A. J. Bishop in his book entitled "Mathematical enculturation. A cultural perspective on mathematics education", 1988, the parameters of the reverse voltage region can be estimated.

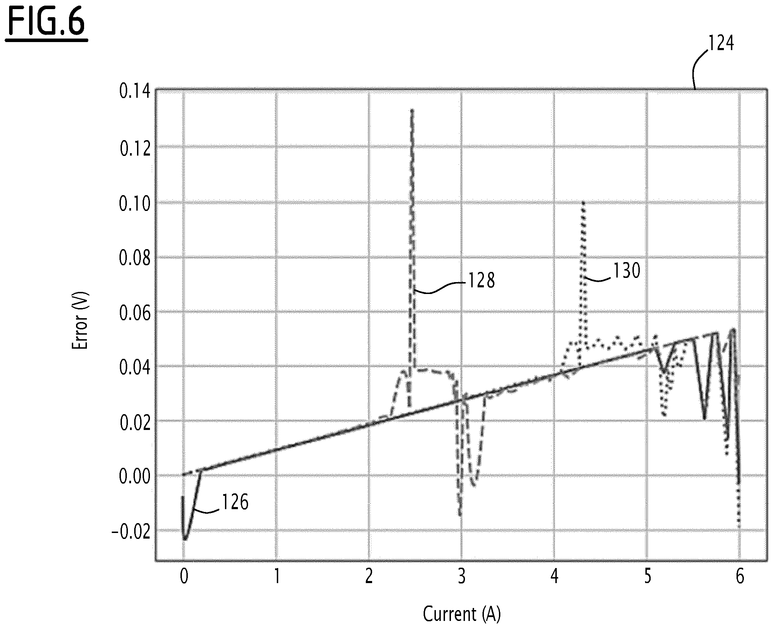

Figure 6 shows the voltage error 126, 128, 130 calculated for each estimated IV curve respectively when a single solar cell has an irradiance equal to 0, 400, and 700 $W\,m^{-2}$ of the previous study case considering a solar module counting with seventy-two solar cells divided into three substrings and a theoretical breakdown voltage value equals to -5.52 V.

For this study case, the maximum error is achieved in the direct voltage region, near the maximum power point. However, the error in the reverse voltage region remains under 0.06 V, value relatively lower when compared to the breakdown voltage. Finally, the RMSE for each model equals 2.63 V, 3.21 V, and 2.9 V (respectively for irradiances of 0 W

m$^{-2}$, 400 W m$^{-2}$, and 700 W m$^{-2}$).

The invention is set out in the appended claims.

Thus, the method 70 for at least estimating a breakdown voltage of a single photovoltaic cell belonging to a set of photovoltaic cells connected in series within a circuit, said set forming a photovoltaic module according to the present disclosure, proposes a solution for characterizing a solar cell (i.e. a photovoltaic cell) in a non-destructive and efficient way, and in particular the inverse part of the IV curve, which is useful to model accurately default(s) in said photovoltaic cell and more generally the photovoltaic module to which said cell belongs.

## Claims

1.  Method (70) for at least estimating a breakdown voltage of a single photovoltaic cell belonging to a set of photovoltaic cells connected in series within a circuit, said set forming a photovoltaic module, said method (70) being at least partially implemented by a device, and said method comprising :

    - a first acquisition step (72) of measurement(s) of said circuit wherein all photovoltaic cells of said set are unshaded, said first acquisition step (72) comprising at least obtaining (76) a measurement of the open circuit voltage $V_{oc,u}$ of said circuit;
    - a second acquisition step (78) of measurement(s) of said circuit wherein a single photovoltaic cell of said set of photovoltaic cells is shaded, said second acquisition step (78) comprising at least obtaining (82) a measurement of the open circuit voltage $V_{oc,s}$ of said circuit;
    - determining (84) an estimation of the breakdown voltage $V_{br}$ of said single shaded photovoltaic cell as function of:

        - the open circuit voltage $V_{oc,u}$ of said circuit wherein all photovoltaic cells of said set are unshaded;
        - the open circuit voltage $V_{oc,s}$ of said circuit wherein said single photovoltaic cell is shaded;
        - the number $n_s$ of photovoltaic cells belonging to said set.

2.  Method (70) according to claim 1, wherein said estimated breakdown voltage $V_{br}$ is determined by using the following equation:

$$V_{br} = -V_{oc,s} + V_{oc,u} - \frac{V_{oc,u}}{n_s} = \frac{-n_s \cdot V_{oc,s} + (n_s - 1) \cdot V_{oc,u}}{n_s}$$

3.  Method (70) according to claim 1 or claim 2, wherein said method further comprises a performance measuring step (86), said performance measuring step comprising the determining of a root mean square error between said estimated breakdown voltage and a theoretical breakdown voltage associated to the single shaded photovoltaic cell of said circuit.

4.  Method (70) according to anyone of preceding claims, wherein said method further comprises estimating the reverse bias voltage of said single shaded photovoltaic cell of said circuit.

5.  Method (70) according to claim 4, wherein for estimating the reverse bias voltage of said single shaded photovoltaic of said circuit :

    - said first acquisition step (72) comprises also obtaining (74) a measurement of a current-voltage curve of said circuit wherein all photovoltaic cells of said set are unshaded;
    - said second acquisition step (78) comprises also obtaining (80) a measurement of a current-voltage curve of said circuit wherein a single photovoltaic cell of said set of photovoltaic cells is shaded;
    - determining (88) an estimation of the reverse bias voltage $V_{sc,s}$ of said single shaded photovoltaic cell of said circuit, as function of:

        - the voltage $V_{m,u}$ of said photovoltaic module wherein all photovoltaic cells of said set are unshaded;
        - the voltage $V_{m,s}$ of said photovoltaic module wherein said single photovoltaic cell is shaded;
        - the number $n_s$ of photovoltaic cells belonging to said set.

6.  Method (70) according to claim 5, said method further comprises a step of tracing a reverse bias voltage curve associated to the estimated reverse bias voltage, said step of tracing using the following equation:

$$V_{sc,s} = -V_{m,s} + V_{m,u} - \frac{V_{m,u}}{n_s} = \frac{-n_s \cdot V_{m,s} + (n_s - 1) \cdot V_{m,u}}{n_s}$$

7. A computer program comprising software instructions which, when executed by a computer, carry out a method for at least estimating a breakdown voltage of a single photovoltaic cell belonging to a set of photovoltaic cells connected in series within a circuit according to anyone of preceding claims.

8. Device (20) for at least estimating a breakdown voltage of a single photovoltaic cell belonging to a set of photovoltaic cells connected in series within a circuit, said set forming a photovoltaic module, said device comprising at least :

- an acquisition module (22, 30) configured to acquire at least:

- a measurement of the open circuit voltage $V_{oc,u}$ of said circuit wherein all photovoltaic cells of said set are unshaded;
- a measurement of the open circuit voltage $V_{oc,s}$ of said circuit wherein a single photovoltaic cell of said set of photovoltaic cells is shaded;

- a determining module (24) configured to determine an estimation of the breakdown voltage $V_{br}$ of said single shaded photovoltaic cell as function of :

- the open circuit voltage $V_{oc,u}$ of said circuit wherein all photovoltaic cells of said set are unshaded;
- the open circuit voltage $V_{oc,s}$ of said circuit wherein said single photovoltaic cell is shaded;
- the number $n_s$ of photovoltaic cells belonging to said set.

9. Device according to claim 8 wherein said acquisition module is a current-voltage curve tracer or a multimeter.

10. System (10) for at least estimating a breakdown voltage of a single photovoltaic cell belonging to a set of photovoltaic cells connected in series within a circuit, said set forming a photovoltaic module, said system comprising a device according to claim 8 or 9, and a shading module (12) configured to shade a single photovoltaic cell of said set of photovoltaic cells.

**Patentansprüche**

1. Verfahren (70), um zumindest eine Durchbruchsspannung einer einzelnen photovoltaischen Zelle zu schätzen, die zu einem Satz von photovoltaischen Zellen gehört, die in einem Schaltkreis in Reihe verbunden sind, wobei der Satz ein photovoltaisches Modul bildet, wobei das Verfahren (70) zumindest teilweise durch eine Vorrichtung implementiert wird und das Verfahren Folgendes umfasst:

- einen ersten Erfassungsschritt (72) von Messung(en) des Schaltkreises, wobei alle photovoltaischen Zellen des Satzes unverschattet sind, wobei der erste Erfassungsschritt (72) zumindest ein Erlangen (76) einer Messung der Leerlaufspannung $V_{oc,u}$ des Schaltkreises umfasst;
- einen zweiten Erfassungsschritt (78) von Messung(en) des Schaltkreises, bei der eine einzelne photovoltaische Zelle des Satzes von photovoltaischen Zellen beschattet ist, wobei der zweite Erfassungsschritt (78) zumindest ein Erlangen (82) einer Messung der Leerlaufspannung $V_{oc,s}$ des Schaltkreises umfasst;
- Bestimmen (84) einer Schätzung der Durchbruchsspannung $V_{br}$ der einzelnen verschatteten photovoltaischen Zelle abhängig von:

- der Leerlaufspannung $V_{oc,u}$ des Schaltkreises, wobei alle photovoltaischen Zellen des Satzes unverschattet sind;
- der Leerlaufspannung $V_{oc,s}$ des Schaltkreises, wobei die einzelne photovoltaische Zelle verschattet ist;
- der Anzahl $n_s$ der photovoltaischen Zellen, die zu dem Satz gehören.

2. Verfahren (70) nach Anspruch 1, wobei die geschätzte Durchbruchspannung $V_{br}$ unter Verwendung der folgenden Gleichung bestimmt wird:

$$V_{br} = -V_{oc,s} + V_{oc,u} - \frac{V_{oc,u}}{n_s} = \frac{-n_s \cdot V_{oc,s} + (n_s - 1) \cdot V_{oc,u}}{n_s}$$

**3.** Verfahren (70) nach Anspruch 1 oder Anspruch 2, wobei das Verfahren ferner einen Leistungsmessungsschritt (86) umfasst, wobei der Leistungsmessungsschritt das Bestimmen eines mittleren quadratischen Fehlers zwischen der geschätzten Durchbruchsspannung und einer theoretischen Durchbruchsspannung umfasst, die mit der einzelnen verschatteten photovoltaischen Zelle der Schaltung assoziiert ist.

**4.** Verfahren (70) nach einem der vorherigen Ansprüche, wobei das Verfahren ferner ein Schätzen der Sperrvorspannung der einzelnen verschatteten photovoltaischen Zelle des Schaltkreises umfasst.

**5.** Verfahren (70) nach Anspruch 4, bei dem die Sperrvorspannung der einzelnen verschatteten Photovoltaikanlage des Schaltkreises geschätzt wird:

- der erste Erfassungsschritt (72) auch ein Erlangen (74) einer Messung einer Strom-Spannungs-Kurve des Schaltkreises umfasst, bei der alle photovoltaischen Zellen des Satzes unverschattet sind;
- der zweite Erfassungsschritt (78) auch ein Erlangen (80) einer Messung einer Strom-Spannungs-Kurve des Schaltkreises umfasst, in der eine einzelne photovoltaische Zelle des Satzes von photovoltaischen Zellen beschattet ist;
- Bestimmen (88) einer Schätzung der Sperrvorspannung $V_{sc,s}$ der einzelnen beschatteten photovoltaischen Zelle des Schaltkreises abhängig von:

- der Spannung $V_{m,u}$ des Fotovoltaikmoduls, wobei alle photovoltaischen Zellen des Satzes unverschattet sind;
- der Spannung $V_{m,s}$ des Fotovoltaikmoduls, wobei die einzelne photovoltaische Zelle verschattet ist;
- der Anzahl $n_s$ der photovoltaischen Zellen, die zu dem Satz gehören.

**6.** Verfahren (70) nach Anspruch 5, wobei das Verfahren ferner einen Schritt eines Verfolgens einer Sperrvorspannungskurve umfasst, die mit der geschätzten Sperrvorspannung assoziiert ist, wobei der Schritt eines Verfolgens die folgende Gleichung verwendet:

$$V_{sc,s} = -V_{m,s} + V_{m,u} - \frac{V_{m,u}}{n_s} = \frac{-n_s \cdot V_{m,s} + (n_s - 1) \cdot V_{m,u}}{n_s}$$

**7.** Computerprogramm, umfassend Softwareanweisungen, die, wenn sie von einem Computer ausgeführt werden, ein Verfahren durchführen, um zumindest eine Durchbruchspannung einer einzelnen photovoltaischen Zelle zu schätzen, die zu einem Satz von photovoltaischen Zellen gehört, die in einem Schaltkreis nach einem der vorherigen Ansprüche in Reihe verbunden sind.

**8.** Vorrichtung (20), um zumindest die Durchbruchsspannung einer einzelnen photovoltaischen Zelle zu schätzen, die zu einer Gruppe von photovoltaischen Zellen gehört, die in einem Schaltkreis in Reihe verbunden sind, wobei die Gruppe ein photovoltaisches Modul bildet, wobei die Vorrichtung zumindest Folgendes umfasst:

- ein Erfassungsmodul (22, 30), das konfiguriert ist, um zumindest Folgendes zu erfassen:

- eine Messung der Leerlaufspannung $V_{oc,u}$ des Schaltkreises, wobei alle photovoltaischen Zellen des Satzes unverschattet sind;
- eine Messung der Leerlaufspannung $V_{oc,s}$ des Schaltkreises, wobei eine einzelne photovoltaische Zelle des Satzes von photovoltaischen Zellen beschattet ist;

- ein Bestimmungsmodul (24), das konfiguriert ist, um eine Schätzung der Durchbruchsspannung $V_{br}$ der einzelnen beschatteten photovoltaischen Zelle abhängig von Folgendem zu bestimmen:

- der Leerlaufspannung $V_{oc,u}$ des Schaltkreises, wobei alle photovoltaischen Zellen des Satzes unverschattet sind;
- der Leerlaufspannung $V_{oc,s}$ des Schaltkreises, wobei die einzelne photovoltaische Zelle verschattet ist;

- der Anzahl $n_s$ der photovoltaischen Zellen, die zu dem Satz gehören.

9. Vorrichtung nach Anspruch 8, wobei das Erfassungsmodul ein Strom-Spannungs-Kurvenverfolger oder ein Multimeter ist.

10. System (10), um zumindest die Durchbruchsspannung einer einzelnen photovoltaischen Zelle zu schätzen, die zu einer Gruppe von photovoltaischen Zellen gehört, die in einem Schaltkreis in Reihe verbunden sind, wobei die Gruppe ein photovoltaisches Modul bildet, das System umfassend eine Vorrichtung nach Anspruch 8 oder 9 und ein Beschattungsmodul (12), das konfiguriert ist, um eine einzelne photovoltaische Zelle des Satzes von photovoltaischen Zellen zu beschatten.

**Revendications**

1. Procédé (70) pour au moins estimer une tension de claquage d'une cellule photovoltaïque unique appartenant à un ensemble de cellules photovoltaïques connectées en série au sein d'un circuit, ledit ensemble formant un module photovoltaïque, ledit procédé (70) étant au moins partiellement mis en œuvre par un dispositif, et ledit procédé comprenant :

- une première étape d'acquisition (72) de mesure(s) dudit circuit dans lequel toutes les cellules photovoltaïques dudit ensemble sont non ombragées, ladite première étape d'acquisition (72) comprenant au moins l'obtention (76) d'une mesure de la tension en circuit ouvert $V_{oc,u}$ dudit circuit ;
- une seconde étape d'acquisition (78) de mesure(s) dudit circuit dans lequel une cellule photovoltaïque unique dudit ensemble de cellules photovoltaïques est ombragée, ladite seconde étape d'acquisition (78) comprenant au moins l'obtention (82) d'une mesure de la tension en circuit ouvert $V_{oc,s}$ dudit circuit ;
- la détermination (84) d'une estimation de la tension de claquage $V_{br}$ de ladite cellule photovoltaïque ombragée unique en fonction de :

- la tension en circuit ouvert $V_{oc,u}$ dudit circuit dans lequel toutes les cellules photovoltaïques dudit ensemble sont non ombragées ;
- la tension en circuit ouvert $V_{oc,s}$ dudit circuit dans lequel ladite cellule photovoltaïque unique est ombragée ;
- le nombre $n_s$ de cellules photovoltaïques appartenant audit ensemble.

2. Procédé (70) selon la revendication 1, dans lequel ladite tension de claquage $V_{br}$ estimée est déterminée à l'aide de l'équation suivante :

$$V_{br} = -V_{oc,s} + V_{oc,u} - \frac{V_{oc,u}}{n_s} = \frac{-n_s \cdot V_{oc,s} + (n_s - 1) \cdot V_{oc,u}}{n_s}$$

3. Procédé (70) selon la revendication 1 ou la revendication 2, dans lequel ledit procédé comprend en outre une étape de mesure des performances (86), ladite étape de mesure des performances comprenant la détermination d'une erreur quadratique moyenne entre ladite tension de claquage estimée et une tension de claquage théorique associée à la cellule photovoltaïque ombragée unique dudit circuit.

4. Procédé (70) selon l'une quelconque des revendications précédentes, dans lequel ledit procédé comprend en outre l'estimation de la tension de polarisation inverse de ladite cellule photovoltaïque ombragée unique dudit circuit.

5. Procédé (70) selon la revendication 4, dans lequel pour estimer la tension de polarisation inverse de ladite cellule photovoltaïque ombragée unique dudit circuit :

- ladite première étape d'acquisition (72) comprend également l'obtention (74) d'une mesure d'une courbe courant-tension dudit circuit dans lequel toutes les cellules photovoltaïques dudit ensemble sont non ombragées ;
- ladite seconde étape d'acquisition (78) comprend également l'obtention (80) d'une mesure d'une courbe courant-tension dudit circuit dans lequel une cellule photovoltaïque unique dudit ensemble de cellules photovoltaïques est ombragée ;
- déterminer (88) une estimation de la tension de polarisation inverse $V_{sc,s}$ de ladite cellule photovoltaïque ombragée unique dudit circuit, en fonction de :

- la tension $V_{m,u}$ dudit module photovoltaïque dans lequel toutes les cellules photovoltaïques dudit ensemble sont non ombragées ;
- la tension $V_{m,s}$ dudit module photovoltaïque dans lequel ladite cellule photovoltaïque unique est ombragée ;
- le nombre $n_s$ de cellules photovoltaïques appartenant audit ensemble.

**6.** Procédé (70) selon la revendication 5, ledit procédé comprend en outre une étape de traçage d'une courbe de tension de polarisation inverse associée à la tension de polarisation inverse estimée, ladite étape de traçage utilisant l'équation suivante :

$$V_{sc,s} = -V_{m,s} + V_{m,u} - \frac{V_{m,u}}{n_s} = \frac{-n_s \cdot V_{m,s} + (n_s - 1) \cdot V_{m,u}}{n_s}$$

**7.** Programme informatique comprenant des instructions logicielles qui, lorsqu'elles sont exécutées par un ordinateur, mettent en oeuvre un procédé pour au moins estimer une tension de claquage d'une cellule photovoltaïque unique appartenant à un ensemble de cellules photovoltaïques connectées en série au sein d'un circuit selon l'une quelconque des revendications précédentes.

**8.** Dispositif (20) pour au moins estimer une tension de claquage d'une cellule photovoltaïque unique appartenant à un ensemble de cellules photovoltaïques connectées en série au sein d'un circuit, ledit ensemble formant un module photovoltaïque, ledit dispositif comprenant au moins :

- un module d'acquisition (22, 30) configuré pour acquérir au moins :

- une mesure de la tension en circuit ouvert $V_{oc,u}$ dudit circuit dans lequel toutes les cellules photovoltaïques dudit ensemble sont non ombragées ;
- une mesure de la tension en circuit ouvert $V_{oc,s}$ dudit circuit dans lequel une cellule photovoltaïque unique dudit ensemble de cellules photovoltaïques est ombragée ;

- un module de détermination (24) configuré pour déterminer une estimation de la tension de claquage $V_{br}$ de ladite cellule photovoltaïque ombragée unique en fonction de :

- la tension en circuit ouvert $V_{oc,u}$ dudit circuit dans lequel toutes les cellules photovoltaïques dudit ensemble sont non ombragées ;
- la tension en circuit ouvert $V_{oc,s}$ dudit circuit dans lequel ladite cellule photovoltaïque unique est ombragée ;
- le nombre $n_s$ de cellules photovoltaïques appartenant audit ensemble.

**9.** Dispositif selon la revendication 8 dans lequel ledit module d'acquisition est un traceur de courbe courant-tension ou un multimètre.

**10.** Système (10) pour au moins estimer une tension de claquage d'une cellule photovoltaïque unique appartenant à un ensemble de cellules photovoltaïques connectées en série au sein d'un circuit, ledit ensemble formant un module photovoltaïque, ledit système comprenant un dispositif selon la revendication 8 ou 9, et un module d'ombrage (12) configuré pour ombrager une cellule photovoltaïque unique dudit ensemble de cellules photovoltaïques.

## FIG.1

EP 4 376 296 B1

a)

52 Solar cell 1   ↑ $V_{oc,\,1}$

54 Solar cell 2   ↑ $V_{oc,\,2}$

56 Solar cell $n_s$   ↑ $V_{oc,\,ns}$

$V_{oc,\,u}$

50

b)

62 Shaded Solar cell 1   ↑ $-V_{br,\,1}$

64 Solar cell 2   ↑ $V_{oc,\,2}$

66 Solar cell $n_s$   ↑ $V_{oc,\,ns}$

$V_{oc,\,s}$

60

## FIG.2

EP 4 376 296 B1

**FIG.3**

## FIG.4

EP 4 376 296 B1

FIG.5

EP 4 376 296 B1

# FIG.6

## REFERENCES CITED IN THE DESCRIPTION

**Patent documents cited in the description**

*   US 2015131187 A1

**Non-patent literature cited in the description**

*   **A. J. BISHOP**. Mathematical enculturation. A cultural perspective on mathematics education. 1988